# EUROPÄISCHE PATENTANMELDUNG

(11) **EP 1 361 459 A1**
(43) Veröffentlichungstag der Anmeldung: **12.11.2003**
(21) Anmeldenummer: 03003006.8
(22) Anmeldetag: 12.02.2003
(51) Int. Cl.: G01S 15/93, G01S 13/93, G01S 17/93

(54) **Fahrerassistenzsystem mit Koppelnavigation**

(30) Priorität: 08.05.2002 DE 10221339
(71) Anmelder: ROBERT BOSCH GMBH, 70442 Stuttgart (DE)
(72) Erfinder: Danz, Christian, 70469 Stuttgart (DE); Uhler, Werner, 76646 Bruchsal (DE); Schmid, Dirk, 75397 Simmozheim (DE)

(57) **Zusammenfassung**

Die Erfindung betrifft ein Fahrerassistenzsystem für ein Fahrzeug mit
- Mitteln 3 zur Bestimmung einer ersten Position eines Hindernisses mit Bezug auf das Fahrzeug, solange das Fahrzeug einen Mindestabstand zu dem Hindernis hat,
- Mitteln 2 zur Bestimmung einer zweiten Position des Hindernisses bei Unterschreitung des Mindestabstands basierend auf einer Weg- und Lenkwinkelmessung.

## Beschreibung

Die Erfindung betrifft ein Fahrerassistenzsystem, insbesondere eine Einparkhilfe oder einen sogenannten Parkpilot, bei dem eine Messung des Abstands eines Hindernisses zu dem Fahrzeug erfolgt.

Aus der DE 303 60 81 A1 ist ein Verfahren zur Distanzmessung nach dem Ultraschall-Echoprinzip für ein Kraftfahrzeug bekannt. Hierbei sind an verschiedenen Stellen des Fahrzeugs Ultraschallsensoren angeordnet, um in dem Erfassungsbereich der Ultraschallsensoren befindliche Objekte zu detektieren. Eine Ermittlung der Position von Hindernissen ist mit diesem System nicht möglich.

Aus der DE 43 33 357 A1 ist eine Weiterbildung dieses Verfahrens zur Distanzmessung nach dem Ultraschall-Echoprinzip bekannt. Auch bei dieser Weiterbildung wird lediglich der Abstand zu einem Hindernis, nicht aber die Position des Hindernisses mit Bezug auf das Fahrzeug erfasst. Bei Unterschreitung eines Mindestabstands zu dem Hindernis liefert der Ultraschallsensor keine hinreichend genauen Werte mehr, so dass für die Bestimmung des Abstands zu dem Hindernis zusätzlich die durch einen Wegsensor gemessene Wegstrecke berücksichtigt wird.

Ferner sind aus dem Stand der Technik Fahrerassistenzsysteme bekannt, die im Allgemeinen auf Radarsensoren, das heißt insbesondere sogenannten Short-Range-Radarsensoren (SRR) basieren. Hierbei handelt es sich um Einparksysteme, Rückfahrhilfen ("Backing Aid"), Auffahrunfalldetektoren und andere Anwendungen. Auch bei solchen SRR basierten Systemen tritt das Problem auf, dass die Radarsensoren Abstandswerte nur bis zu einem Abstandswert von mindestens etwa 20 cm bis 50 cm liefern; bei einem geringeren Abstand liefert ein solcher Radarsensor kein für die Abstandsmessung verwendbares Signal.

Der Erfindung liegt die Aufgabe zu Grunde ein verbessertes Fahrerassistenzsystem zu schaffen.

Die der Erfindung zu Grunde liegende Aufgabe wird mit den Merkmalen des unabhängigen Patentanspruchs gelöst. Bevorzugte Ausführungsformen der Erfindung sind in den abhängigen Patentansprüchen angegeben.

Erfindungsgemäß wird nicht nur der Abstand eines Hindernisses zu dem Fahrzeug, sondern die Position des Hindernisses bestimmt. Dies erfolgt beispielsweise basierend auf dem Prinzip der Triangulation.

Zur Durchführung einer Positionsbestimmung mittels Triangulation ist die Messung des Abstandes zwischen dem Fahrzeug und dem Hindernis von zwei verschiedenen Positionen, das heißt von zwei an unterschiedlichen Stellen des Fahrzeugs angeordneten Abstandssensoren erforderlich.

Beispielsweise sind am Fahrzeugheck an der linken und rechten Fahrzeugseite jeweils ein Short-Range-Radarsensor angeordnet. Ein hinter dem Fahrzeug befindliches Hindernis wird von beiden der Abstandssensoren erfasst und der Abstand des Hindernisses zu dem linken und dem rechten Sensor wird dann ermittelt. Aus den beiden von den verschiedenen Positionen der Sensoren aus ermittelten Abständen wird dann die Position des Hindernisses mit Bezug auf das Fahrzeug nach dem Prinzip der Triangulation berechnet.

Wenn ein Mindestabstand zu dem Hindernis unterschritten wird, liefert zumindest einer der Radarsensoren kein hinreichend genaues Messsignal mehr, so dass eine Positionsbestimmung des Hindernisses mittels Triangulation nicht mehr möglich ist. Erfindungsgemäß wird deshalb bei Unterschreitung eines Mindestabstands eine Weg- und Lenkwinkelmessung mit für die Bestimmung der Position des Hindernisses herangezogen.

Alternativ zur Lenkwinkelmessung mittels eines Lenkwinkelsensors kann auch die Gierrate ausgewertet werden. Die Gierrate wird von einem ESP-Steuergerät ohnehin ermittelt.

Hierzu wird von der letzten durch Triangulation bestimmten Position des Hindernisses ausgehend eine aktuelle Position des Hindernisses ermittelt, indem zu der letzten durch Triangulation bestimmten Position die Bewegung des Fahrzeugs aufgrund einer Erfassung des von dem Fahrzeug zurückgelegten Wegs und einer Lenkwinkelmessung vektoriell aufaddiert wird.

Von besonderem Vorteil ist hierbei, dass eine Fahrerassistenz auch im Nahbereich, das heißt bei Unterschreiten des für die Funktion der Abstandssensoren erforderlichen Mindestabstands, noch gewährleistet ist, da in diesem Bereich die Positionsbestimmung nicht mittels der Abstandssensoren, sondern mittels Weg- und Lenkwinkelmessung ausgehend von der letzten durch Triangulation bestimmten Position erfolgt.

Bei der Bestimmung der Position des Hindernisses im "blinden Bereich" wird also bevorzugt wie folgt vorgegangen. Ausgehend von der letzten bekannten Position, die mittels Triangulation bestimmt wurde, wird auf der Grundlage der Daten der Radsensoren und des Lenkwinkelsensors die nächste Position des Hindernisses relativ zum Fahrzeug bestimmt. Dieses Vorgehen wird von Messzyklus zu Messzyklus wiederholt.

Somit kann eine vollständige Modellierung der Trajektorie des Fahrzeugs und der Position des Hindernisses erfolgen, das heißt die Position des Hindernisses ist auch bei Kurvenfahrt immer bekannt. Aufgrund dessen kann insbesondere ermittelt werden, ob das Fahrzeug bei einer Kurvenfahrt an dem Hindernis vorbeifährt oder ob es bei einer Weiterbewegung zu einer Kollision kommt und ein entsprechender Warnhinweis gegeben werden muss.

Nach einer bevorzugten Ausführungsform der Erfindung erfolgt die Ermittlung einer Kontur des Hindernisses durch Vermessung der Kontur mit Hilfe von Abstandssensoren. Über diese Kontur des Hindernisses wird eine konvexe Hülle definiert. Wenn ein Mindestabstand des Fahrzeugs zu der konvexen Hülle unterschritten wird, wird ein Warnsignal abgegeben.

Dies ist insbesondere vorteilhaft, wenn in einer Parklücke eines der parkenden Fahrzeuge mit einer Anhängerkupplung oder einem anderen herausragenden Objekt versehen ist, welches in den Parkbereich hineinreicht. Der Einparkvorgang kann dann aufgrund der die Anhängerkupplung bzw. das herausragende Objekt umfassenden konvexen Hülle optimiert werden, so dass auch eine Fahrerassistenz bei besonders engen Parklücken gegeben ist.

Nach einer weiteren bevorzugten Ausführungsform der Erfindung wird ein in dem Fahrzeug oftmals ohnehin vorhandenes Electronic Stability Program (ESP) für die Wegmessung verwendet.

Im Weiteren werden bevorzugte Ausführungsformen der Erfindung mit Bezugnahme auf die Zeichnungen näher erläutert. Es zeigen:
- Fig. 1: ein Fahrzeug mit einem erfindungsgemäßen Fahrerassistenzsystem einer ersten Ausführungsform;
- Fig. 2: ein Fahrzeug mit einem erfindungsgemäßen Fahrerassistenzsystem einer zweiten Ausführungsform;
- Fig. 3: ein Flussdiagramm zur Veranschaulichung der Arbeitsweise einer Ausführungsform eines erfindungsgemäßen Fahrerassistenzsystems;
- Fig. 4: ein Flussdiagramm zur Veranschaulichung der Arbeitsweise einer weiteren Ausführungsform des Fahrerassistenzsystems.

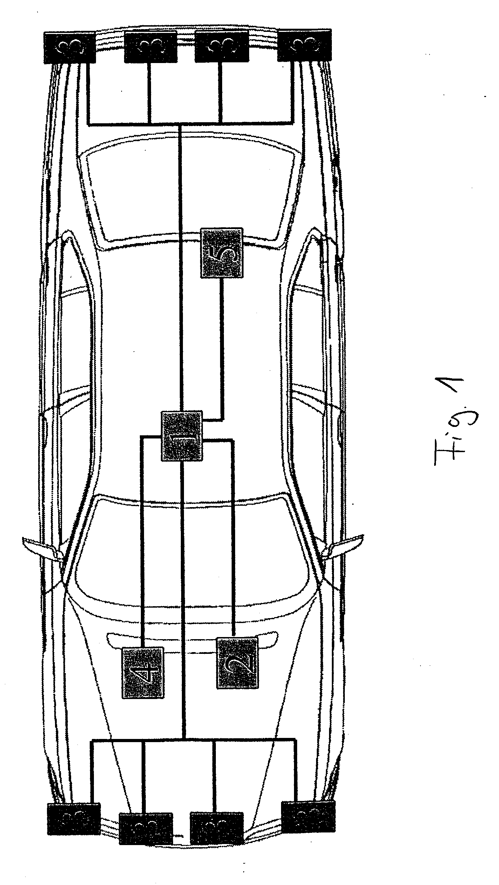

Die Fig. 1 zeigt ein Kraftfahrzeug mit einem Steuergerät 1. In dem Ausführungsbeispiel der Fig. 1 handelt es sich bei dem Steuergerät 1 um ein SRR-Parkpilot-Steuergerät zur Realisierung einer Fahrerassistenz für das Einparken mittels Short-Range-Radarsensoren.

Das Steuergerät 1 ist mit einem Wegsignalgeber 2 verbunden. Als Wegsignalgeber können ein oder mehrere Raddrehzahlsensoren des Fahrzeugs verwendet werden.

Ferner ist das Steuergerät 1 mit mehreren SRR-Sensoren 3 verbunden, wobei jeweils vier SSR-Sensoren 3 entlang des vorderen und des hinteren Stoßfängers des Fahrzeugs angeordnet sind.

Das Steuergerät 1 ist ferner mit einem Lenkwinkelsensor 4 verbunden. Über den Lenkwinkelsensor 4 wird der Einschlagwinkel der Lenkung des Fahrzeugs erfasst.

Ferner ist eine Anzeigeeinrichtung 5 mit einem Ausgang des Steuergeräts 1 verbunden. Bei der Anzeigeeinrichtung 5 kann es sich zum Beispiel um eine optische und / oder akustische Anzeigeeinrichtung handeln; zusätzlich oder alternativ kann auch eine haptische Ausgabe vorgesehen sein.

Über die SRR-Sensoren 3 erfolgt die Bestimmung einer Position eines vor bzw. hinter dem Fahrzeug befindlichen Hindernisses bei einem Einparkvorgang. Eine solche Positionsbestimmung ist nur dann möglich, sofern dass Hindernis von zumindest zwei der SRR-Sensoren 3 an der Vorder- bzw. Rückseite des Fahrzeugs erfasst wird, so dass eine Triangulation aufgrund der entsprechenden Abstandswerte durchgeführt werden kann.

Unterhalb eines Mindestabstands kann eine solche Positionsbestimmung nicht mehr vorgenommen werden, da nur ein oder kein Abstandssignal von den SRR-Sensoren 3 geliefert wird. In diesem Fall wird die Position des Fahrzeugs mittels der von dem Wegsignalgeber 2 und dem Lenkwinkelsensor 4 gelieferten Signale durch das Steuergerät 1 vorgenommen. Dies erfolgt so, dass ausgehend von der letzten durch Triangulation bestimmten Position die Position des Fahrzeugs durch Modellierung der Trajektorie des Fahrzeugs entsprechend des bei einem bestimmten Lenkwinkeleinschlag zurückgelegten Wegs bestimmt wird.

Sobald ein definierter Mindestabstand an einer Stelle der Außenkontur des Fahrzeugs zu dem Hindernis unterschritten wird, gibt das Steuergerät 1 über die Anzeigeeinrichtung 5 ein Warnsignal für den Fahrer ab. Alternativ oder zusätzlich wird das Fahrzeug automatisch abgebremst, um eine Kollision zu verhindern.

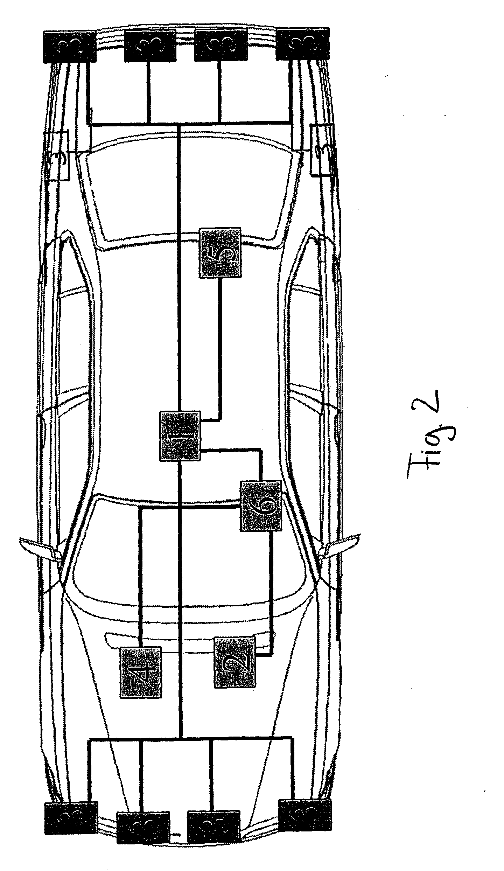

Die Fig. 2 zeigt eine alternative Ausführungsform, bei der zusätzlich ein ESP-Steuergerät 6 vorhanden ist. Im Unterschied zu der Ausführungsform der Fig. 1 sind der Wegsignalgeber 2 und der Lenkwinkelsensor 4 nicht unmittelbar an das Steuergerät 1, sondern an das ESP-Steuergerät 6 angeschlossen. Das Steuergerät 1 erhält die Weg- und Lenkwinkelsignale in diesem Ausführungsbeispiel von dem ESP-Steuergerät 6.

Zusätzlich können auch seitlich an dem Fahrzeug weitere SRR-Sensoren 3 angeordnet sein, wie in der Fig. 2 dargestellt. Diese seitlich angeordneten SRR-Sensoren 3 können zur Erfassung einer Außenkontur des Hindernisses verwendet werden.

Typischerweise erfolgt der Einparkvorgang so, dass zunächst an der Parklücke vorbeigefahren wird, um unmittelbar hinter der Parklücke zu stoppen, und dann rückwärts in die Parklücke hineinzufahren. Bei der Vorbeifahrt an der Parklücke erfolgt eine seitliche Erfassung der Außenkontur von in der Parklücke befindlichen oder in die Parklücke hineinragenden Hindernissen, wie zum Beispiel einer Anhängerkupplung. Über die Außenkontur der die Parklücke begrenzenden parkenden Fahrzeuge wird eine konvexe Hülle gelegt, in die die Begrenzung des einzuparkenden Fahrzeugs nicht eindringen darf, das heißt das Fahrzeug muss bei dem Einparkvorgang einen vorgegebenen Mindestabstand von der konvexen Hülle einhalten. Dadurch wird ermöglicht, dass auch bei in die Parklücke hineinragenden Hindernissen, wie zum Beispiel einer Anhängerkupplung, der für das Einparken nutzbare Raum optimal genutzt werden kann.

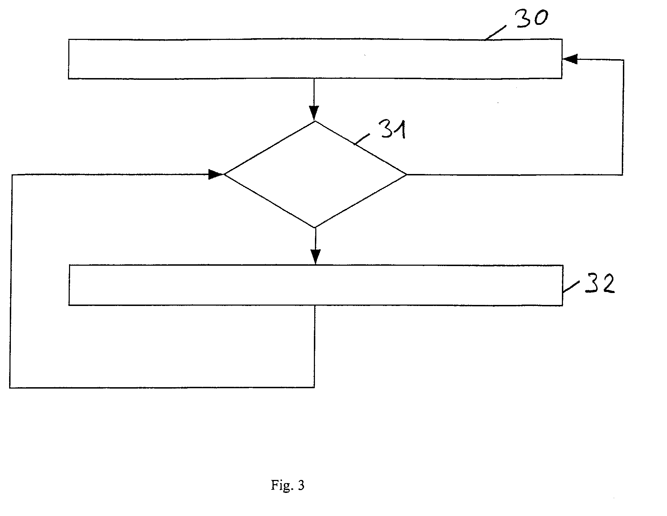

Die Fig. 3 veranschaulicht den Ablauf beim Betrieb des erfindungsgemäßen Fahrerassistenzsystems. In dem Schritt 30 erfolgt die Bestimmung der Position eines Hindernisses mit Bezug auf das Fahrzeug nach dem Prinzip der Triangulation über an dem Fahrzeug angebrachte Abstandssensoren.

In dem Schritt 31 wird geprüft, ob mindestens zwei der Abstandssensoren ein hinreichend genaues Abstandssignal zu dem erfassten Hindernis liefern. Dies ist bei Unterschreitung eines Mindestabstands zu dem Hindernis nicht mehr der Fall.

Wenn von den Abstandssensoren hinreichende Abstandssignale vorliegen, geht die Ablaufsteuerung zurück zu dem Schritt 30, um die aktuelle Position des Hindernisses mit Bezug auf das Fahrzeug erneut zu bestimmen.

Ist jedoch das Gegenteil der Fall, das heißt liegt nur ein oder kein hinreichendes Abstandssignal der Abstandssensoren vor, da der Mindestabstand unterschritten worden ist, geht die Ablaufsteuerung zu dem Schritt 32. In dem Schritt 32 erfolgt die Bestimmung der Position des Hindernisses mit Bezug auf das Fahrzeug basierend auf der letzten in dem Schritt 30 ermittelten Position des Hindernisses, wobei der von dem Fahrzeug seit der letzten Positionsbestimmung zurückgelegte Weg vektoriell aufgrund der Lenkwinkelbestimmung aufaddiert wird. Auf diese Art und Weise erhält man die Position des Hindernisses im Nahbereich.

Nach dieser Positionsbestimmung im Schritt 32 geht die Ablaufsteuerung zurück zu dem Schritt 31, um zu prüfen, ob hinreichende Signale von den Abstandssensoren vorliegen.

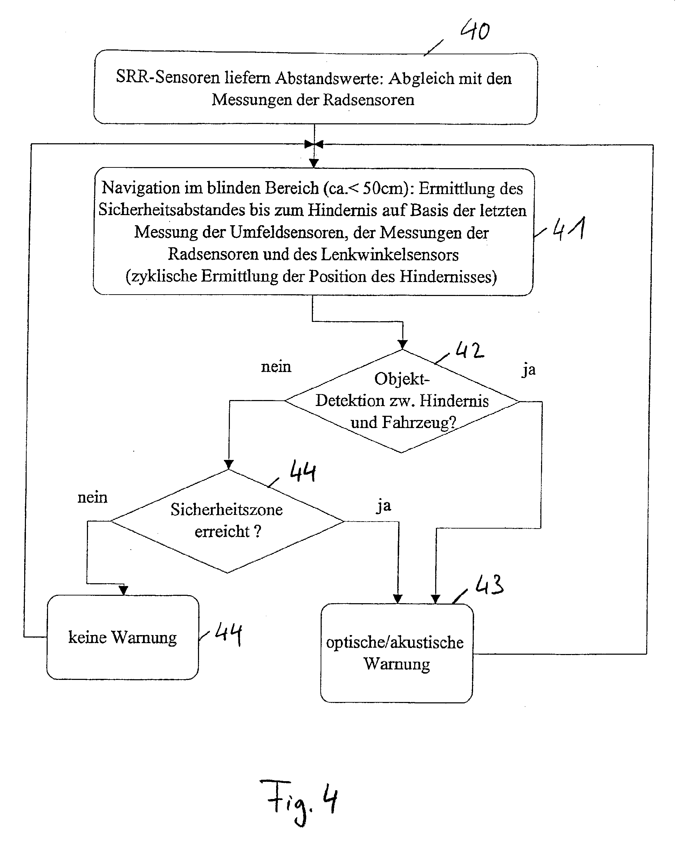

Die Fig. 4 zeigt eine weitere bevorzugte Ausführungsform des Fahrerassistenzsystems. In dem Schritt 40 liefern die als SRR-Sensoren ausgebildeten Abstandssensoren hinreichend genaue Abstandswerte, so dass die Position eines Hindernisses mittels Triangulation bestimmt werden kann. Die aufgrund dieser Messungen bestimmter Fahrzeugtrajektorie wird mit dem Wegsignalgeber und / oder dem Lenkwinkelsensor abgeglichen, um einen Korrekturwert zu erhalten.

In dem Schritt 41 erfolgt die Navigation im "blinden Bereich", das heißt in einem Bereich von weniger als ca. 20 cm bis 50 cm von dem Hindernis entfernt. In diesem Bereich wird mittels Koppelnavigation navigiert, das heißt die aktuelle Hindernisposition wird ausgehend von der letzten durch Triangulation bestimmten Position durch vektorielle Aufaddierung des zurückgelegten Wegs ermittelt.

In dem Schritt 42 wird geprüft, ob sich zwischen dem Hindernis und dem Fahrzeug ein Objekt befindet. Wenn dies der Fall ist, wird in dem Schritt 43 eine optische und / oder akustische und / oder haptische Warnung abgegeben. Ist kein solches Objekt vorhanden, so wird in dem Schritt 44 geprüft, ob sich ein Punkt der Fahrzeugaußenkontur soweit an das Hindernis angenähert hat, dass ein minimaler Sicherheitsabstand unterschritten worden ist. Wenn dies der Fall ist, wird der Schritt 43 ausgeführt. Wird der Sicherheitsabstand nicht unterschritten, so wird der Schritt 44 ausgeführt, das heißt es erfolgt keine Warnung.

### Bezugszeichenliste

- Steuergerät: 1
- Wegsignalgeber: 2
- SRR-Sensoren: 3
- Lenkwinkelsensor: 4
- Anzeigeeinrichtung: 5
- ESP-Steuergerät: 6

## Patentansprüche

1. Fahrerassistenzsystem für ein Fahrzeug mit
- Mitteln (3) zur Bestimmung einer ersten Position eines Hindernisses mit Bezug auf das Fahrzeug, solange das Fahrzeug einen Mindestabstand zu dem Hindernis hat,
- Mitteln (2)zur Bestimmung einer zweiten Position des Hindernisses bei Unterschreitung des Mindestabstands basierend auf einer Weg- und Lenkwinkelmessung.

2. Fahrerassistenzsystem nach Anspruch 1, bei dem die Mittel zur Bestimmung einer ersten Position eines Hindernisses einen oder mehrere Radarsensoren, vorzugsweise Short-Range-Radarsensoren (SRR) einen oder mehrere Ultraschall- oder optische Sensoren aufweisen.

3. Fahrerassistenzsystem nach Anspruch 1 oder 2, bei dem die Mittel zur Bestimmung einer ersten Position eines Hindernisses erste Sensormittel zur Bestimmung einer ersten Entfernung des Fahrzeugs von dem Hindernis und Mittel zur Bestimmung einer zweiten Entfernung des Fahrzeugs von dem Hindernis aufweisen und Mittel zur Berechnung der ersten Position mittels Triangulation aus der ersten und der zweiten Entfernung.

4. Fahrerassistenzsystem nach einem der vorhergehenden Ansprüche 1, 2 oder 3 mit
- Sensormitteln zur Ermittlung einer Außenkontur des Hindernisses,
- Mitteln zur Festlegung einer konvexen Hülle um die Außenkontur des Hindernisses,
- Mitteln zur Abgabe eines Signals, wenn ein Mindestabstand des Fahrzeugs von der konvexen Hülle unterschritten wird.

5. Fahrerassistenzsystem nach einem der vorhergehenden Ansprüche 1 bis 4 mit Mitteln (1) zur Umschaltung der Bestimmung der Position des Hindernisses von den Mitteln zur Bestimmung einer ersten Position zu den Mitteln zur Bestimmung einer zweiten Position, wenn eine Unterschreitung des Mindestabstands zu dem Hindernis detektiert wird.

6. Fahrerassistenzsystem nach einem der vorhergehenden Ansprüche 1 bis 5, wobei die Mittel zur Bestimmung einer zweiten Position des Hindernisses zur Erfassung der von einem oder mehreren Raddrehzahlsensoren gelieferten Signale für die Wegmessung ausgebildet sind.

7. Fahrerassistenzsystem nach einem der vorhergehenden Ansprüche 1 bis 6, wobei die Mittel zur Bestimmung einer zweiten Position des Hindernisses zur Erfassung der von einem Electronic Stability Program (ESP) (6) abgegebenen Signale für die Wegmessung ausgebildet sind.

8. Fahrerassistenzsystem nach einem der vorhergehenden Ansprüche 1 bis 7 mit Mitteln zur automatischen Abbremsung des Fahrzeugs, wenn ein Sicherheitsabstand zu dem Hindernis unterschritten wird.

9. Fahrerassistenzsystem nach einem der vorhergehenden Ansprüche 1 bis 8, wobei es sich um einen Parkpilot, eine Backing Aid, einen Auffahrunfalldetektor oder dergleichen handelt.
